# EUROPEAN PATENT SPECIFICATION

(11) **EP 0 905 015 B1**
(45) Date of publication and mention of the grant of the patent: **14.08.2002**
(21) Application number: 99100564.6
(22) Date of filing: 04.07.1997
(51) Int. Cl.: B62M 23/02, B62J 9/00, B62K 19/30, B62K 19/40

(54) **Battery mounting structure for motor-assisted bicycle**
Anordnung zum Einbau van Batterien in Fahrrädern mit Hilfsmotor
Structure de montage d'une batterie pour bicyclette à moteur auxiliaire

(30) Priority: 08.07.1996 JP 17794396; 16.12.1996 JP 33597896
(43) Date of publication of application: 31.03.1999
(62) Divisional of application: 97111332.9
(73) Proprietor: HONDA GIKEN KOGYO KABUSHIKI KAISHA, Minato-ku Tokyo (JP)
(72) Inventor: Shimmura, Hiroyuki, Wako-shi, Saitama (JP); Endoh, Sakae, Wako-shi, Saitama (JP); Yamaguchi, Masaaki, Wako-shi, Saitama (JP); Kawaguchi, Kenji, Wako-shi, Saitama (JP)
(74) Representative: Liska, Horst, Dr.-Ing.

(56) References cited:
- EP-A- 0 561 268
- EP-A- 0 712 779
- DE-A- 3 014 809
- DE-A- 4 232 086
- US-A- 5 406 816
- US-A- 5 433 284

## Description

The present invention relates to a battery mounting structure for a motor-assisted bicycle in which an electric motor for assisting a step-on force of crank pedals and a battery are to be mounted on a body frame, the battery being composed of a battery case containing a cell assembly for supplying a power to the electric motor.

A battery mounting structure for a motor-assisted bicycle of this type has been known, for example, from Japanese Patent Laid-open Nos. Hei 6-237535 on Hei 7-40878, as a basis for the preamble of claim 1.

In the above-described related art motor-assisted bicycle, a battery is contained in a containing box fixedly disposed behind a seat post under a seat. Accordingly, when the battery is removed from the containing box for charging or it is contained again in the containing box after charging, the seat must be turned not to obstruct the work of containing or removing the battery. Therefore, the battery mounting structure of the related art motor-assisted bicycle is not excellent in workability.

In view of the foregoing, the present invention has been made, and an object of the present invention is to provide a battery mounting structure for a motor-assisted bicycle, which is capable of extremely easily performing a work of mounting/dismounting a battery.

To achieve the above object, according to an invention described in claim 1, there is provided a battery mounting structure for a motor-assisted bicycle in which an electric motor for assisting a step-on force of crank pedals and a battery are to be mounted on a body frame, said battery being composed of a battery case containing a cell assembly for supplying a power to said electric motor, characterized in that said battery is vertically insertably/removably contained in a battery containing case disposed on a back surface portion or a front surface portion of a basket to be mounted on said motor-assisted bicycle.

According to the invention, a battery is insertably/removably contained in a battery containing case disposed on a back surface portion or a front surface portion of a basket in the vertical direction.

With this configuration, the battery can be easily mounted/dismounted into/from a motor-assisted bicycle by the same extremely simple operation as the inserting/removing operation of a baggage into/from the basket.

Claims 2 to 6 are directed to preferred embodiments.

Preferably, the battery containing case includes a containing case main body opened upward for insertably/removably containing the battery and a lid for openably closing an opening portion provided at an upper end of the containing case main body; the battery case includes a residual power indicator disposed on an upper surface of the battery case. Here, the lid has a window for allowing visual observation of the residual power indicator from top in a state in which the opening portion provided at the upper end of the containing case main body is closed. As a result, the rider can easily confirm the residual power of the battery.

Preferably, the containing case main body is formed in such a shape as to allow the battery inserted in the containing case main body to be tilted forward and backward in a state in which the lid is opened; the lid is provided with a pressing portion which is brought in contact with the battery when the lid is closed for tilting the battery either forward or backward in the containing case main body. Here, the containing case main body has one of an engagement projecting portion and a locking recessed portion which are engaged with each other in accordance with the tilting of the battery when the lid is closed, and the battery has the other of the engagement projecting portion and the locking recessed portion. Accordingly, the engagement projecting portion is engaged with the locking recessed portion in a state in which the lid is closed. As a result, it is possible to effectively restrict the battery contained in the containing case main body not to be vibrated in the vertical direction.

Preferably, the containing case main body has an elastic portion which elastically biases the battery in the reversed direction to the direction along which the battery is pressed accompanied by closing the lid but which allows the battery to be tilted up to a position where the engagement projecting portion is engaged with the locking recessed portion when the lid is closed, the elastic portion being located at a position offset from a locus depicted by the engagement projecting portion or the locking recessed portion provided on or in the battery when the battery is inserted/removed into/from the containing case main body. Here, the battery is biased by the elastic portion in the direction where the engagement between the engagement projection portion and the locking recessed portion is released when the lid is opened. As a result, the battery can be easily inserted/removed into/from the containing case main body while avoiding the interference of the elastic portion with the engagement projecting portion or locking recessed portion provided on or in the battery.

Preferably, the containing case main body includes front and rear case halves fastened to each other, the front and rear case halves being able to be divided into front and rear parts; and either of the front and rear case halves is integrally provided with a cover wall covering both connecting portions of the case halves from the outside substantially throughout the entire lengths in the vertical direction. Here, both the connecting portions of the case halves cannot be viewed from the exterior. As a result, it.is possible to ensure a preferable appearance.

Preferably, the basket has swelled portions integrally provided on both sides thereof, the swelled portions being swelled on both sides of the battery containing case in such a manner that a recessed portion for containing part of the battery containing case is formed between the swelled portions, Here, the swelled portions are fastened to the supporting frame fixed on the body frame. As a result, the fastening portion of the basket to the supporting frame can be disposed at a position where it does not interfere with a baggage contained in the basket.

Hereinafter, embodiments of the present invention will be described with reference to the accompanying drawings.

Figs. 1 to 16 show a first embodiment of the present invention.

Fig. 1 is a side view of a motor-assisted bicycle.

Fig. 2 is an enlarged vertical sectional side view of a motor unit.

Fig. 3 is a plan view seen from an arrow 3 of Fig. 1.

Fig. 4 is a sectional view taken on line 4-4 of Fig. 3.

Fig. 5 is a sectional view taken on line 5-5 of Fig. 3.

Fig. 6 is a sectional view taken on line 6-6 of Fig. 3.

Fig. 7 is a sectional view, similar to Fig. 6, showing a state in which a battery containing case is opened.

Fig. 8 is a front view of a battery.

Fig. 9 is a side view seen from an arrow 9 of Fig. 8.

Fig. 10 is a schematic view showing an internal configuration of the battery.

Fig. 11 is a sectional view taken on line 11-11 of Fig. 4.

Fig. 12 is a sectional view taken on line 12-12 of Fig. 4.

Fig. 13 is a plan view of a charger.

Fig. 14 is a sectional view taken on line 14-14 of Fig. 13.

Fig. 15 is a sectional view taken on line 15-15 of Fig. 13.

Fig. 16 is a schematic view showing a configuration of the charger.

Figs. 17 to 24 show a second embodiment of the present invention.

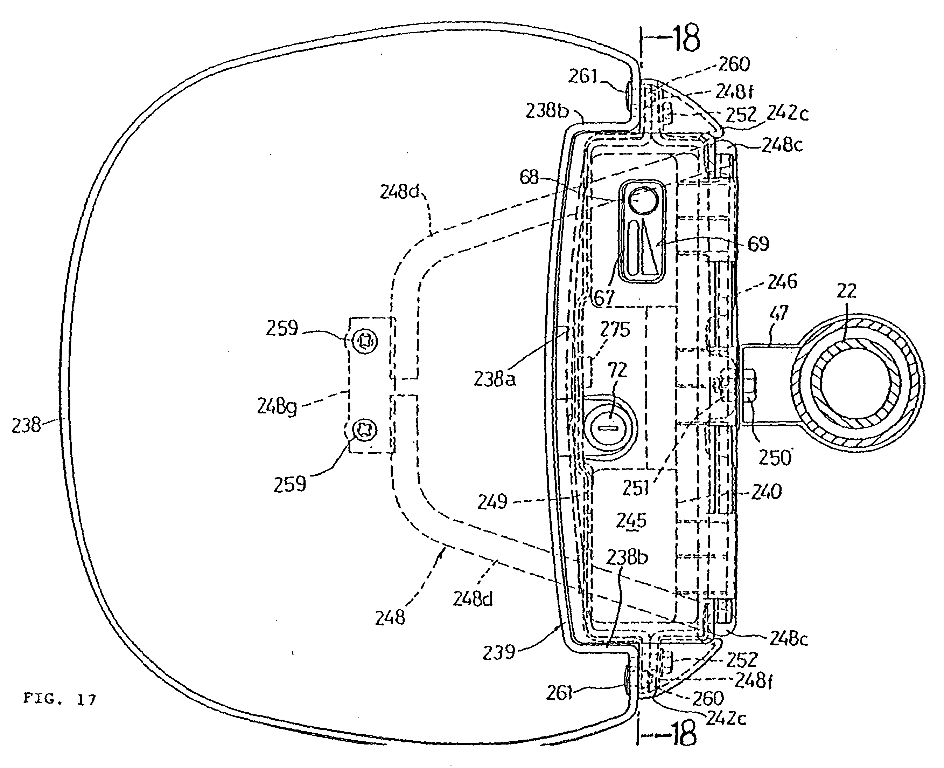

Fig. 17 is a plan view showing a basket and a battery containing case.

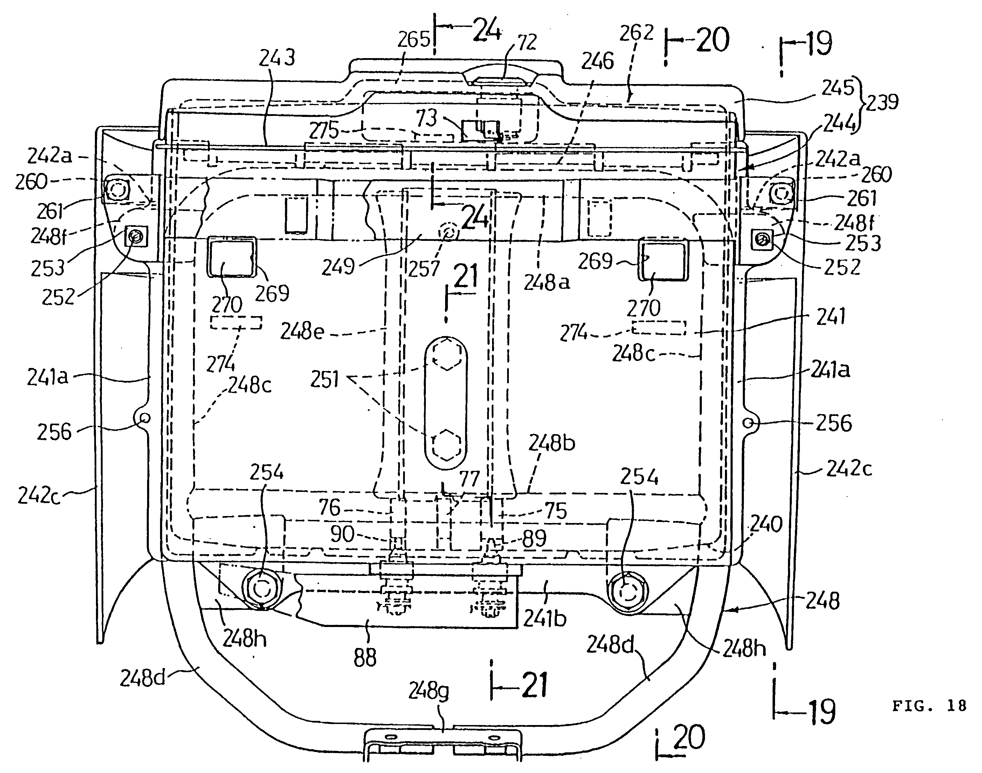

Fig. 18 is a sectional view taken on line 18-18 of Fig. 17.

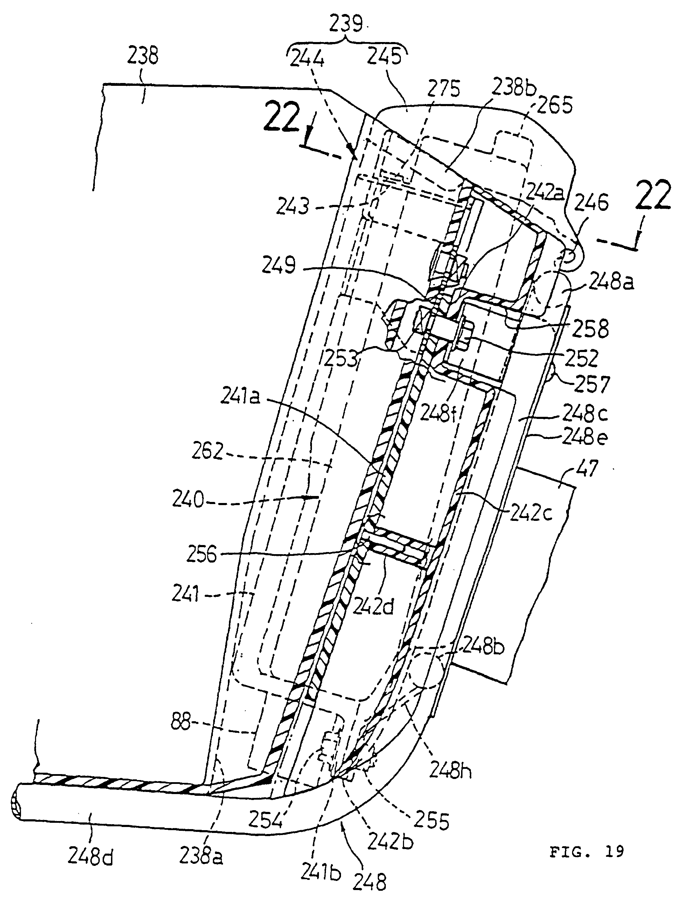

Fig. 19 is a sectional view taken on line 19-19 of Fig. 18.

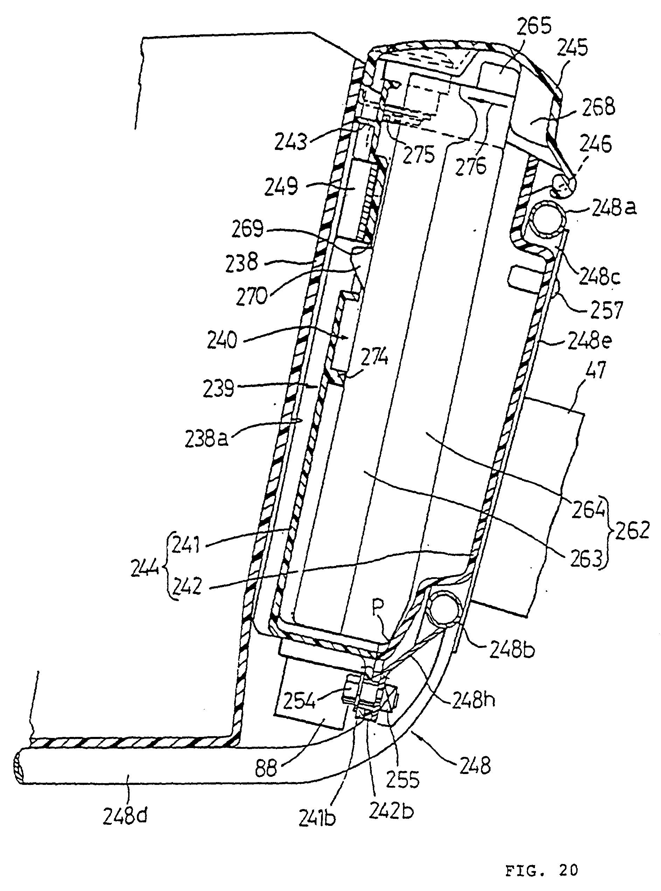

Fig. 20 is a sectional view taken on line 20-20 of Fig. 18.

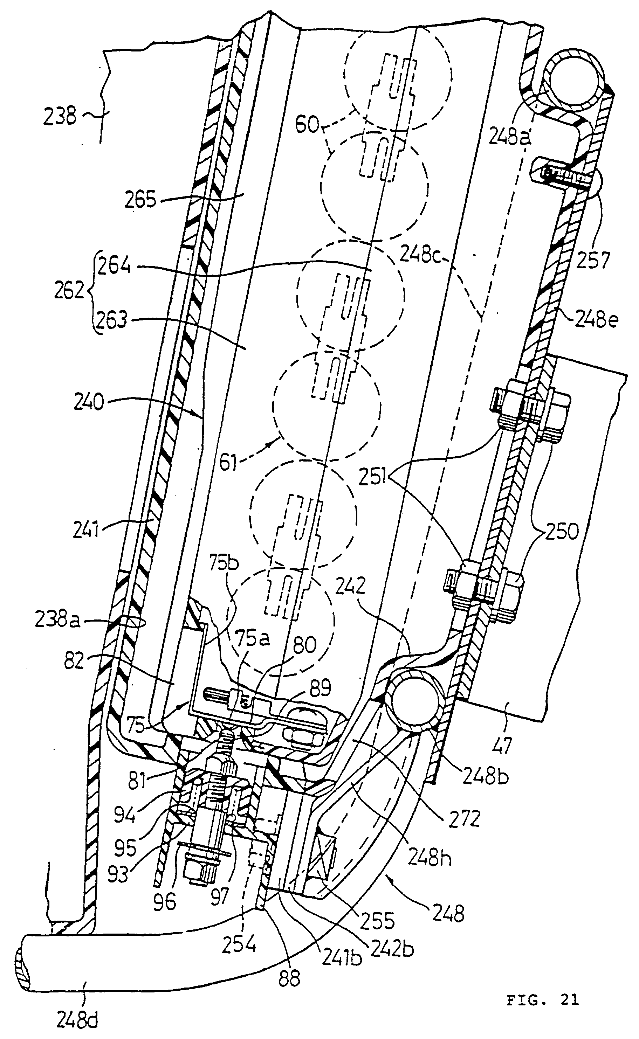

Fig. 21 is a sectional view taken on line 21-21 of Fig. 18.

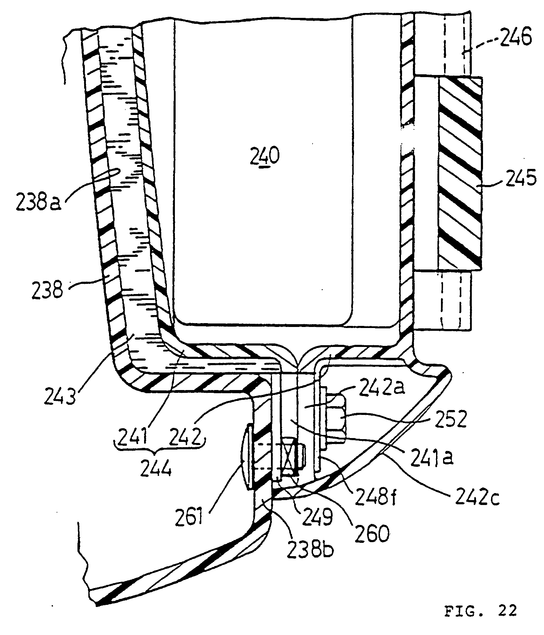

Fig. 22 is a sectional view taken on line 22-22 of Fig. 19.

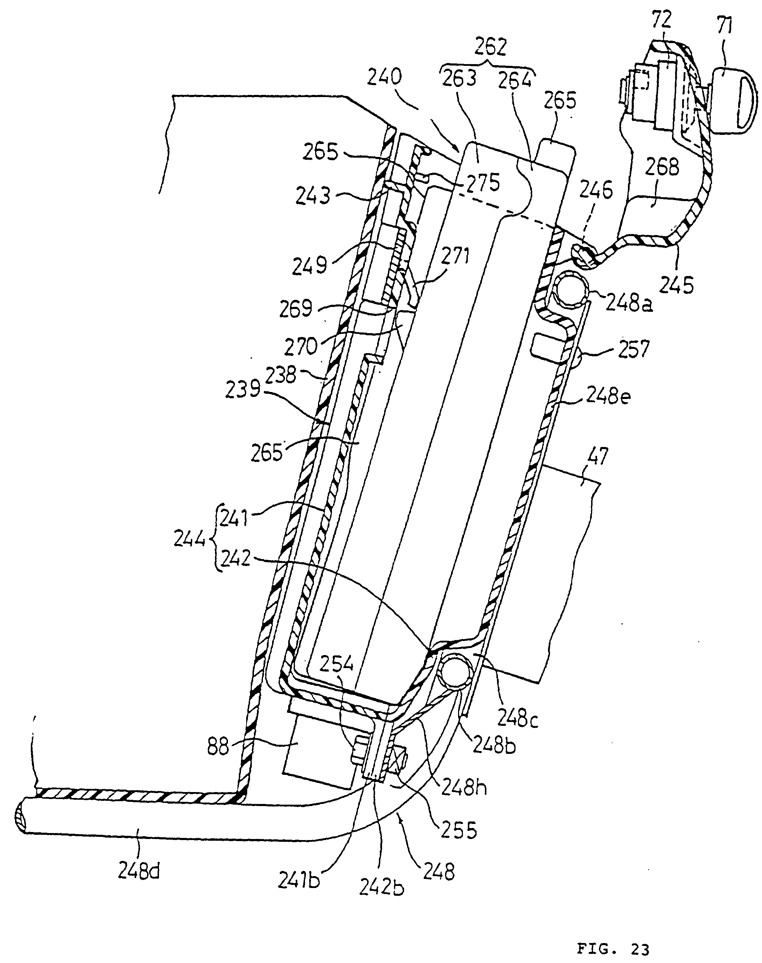

Fig. 23 is a sectional view, similar to Fig. 20, showing a state in which a lid is opened.

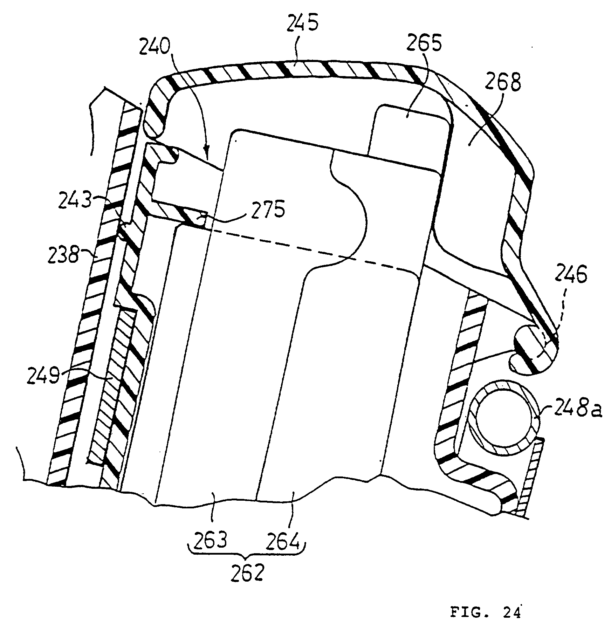

Fig. 24 is an enlarged sectional view taken on line 24-24 of Fig. 18.

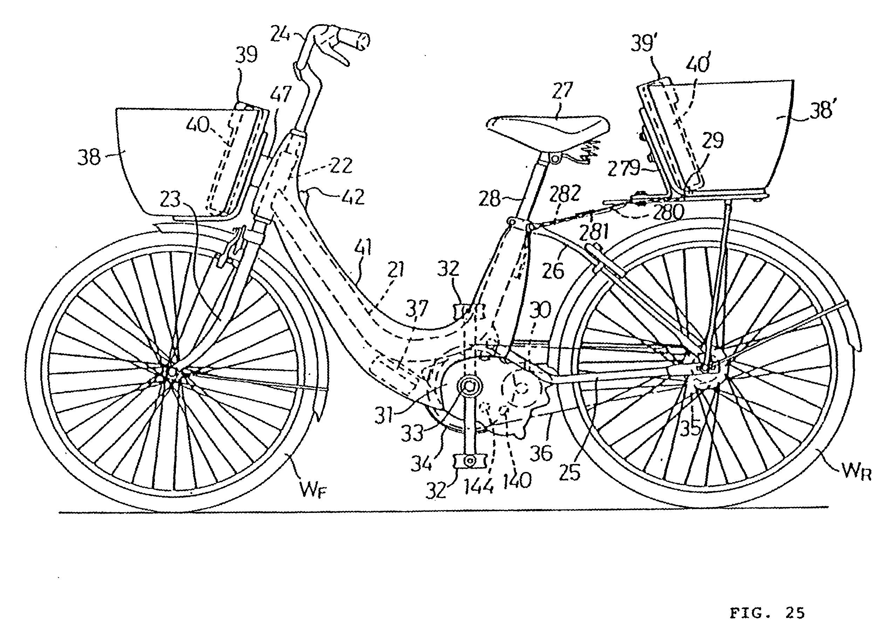

Fig. 25 is a side view of a motor-assisted bicycle according to a third embodiment.

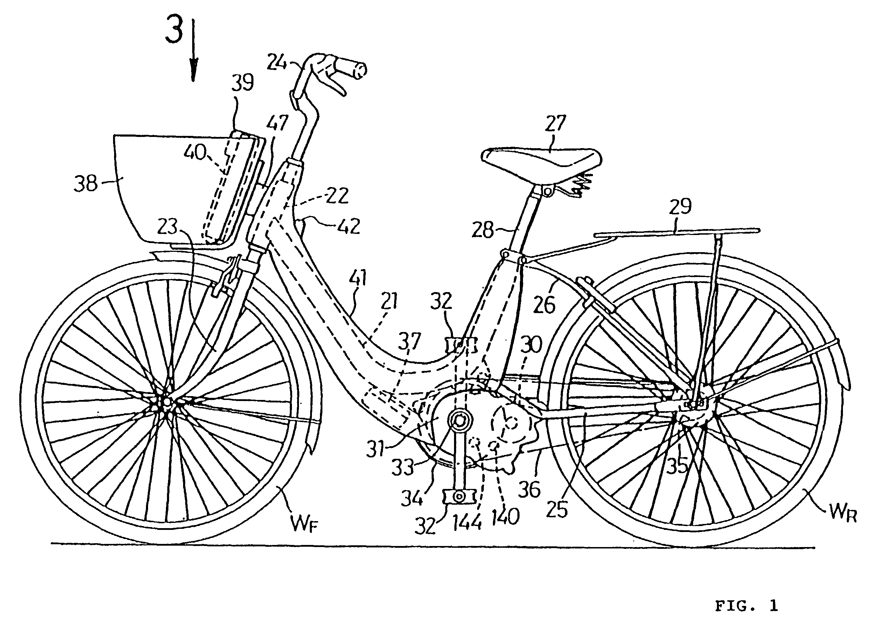

Referring first to Fig. 1, there is shown a motor-assisted bicycle of the present invention, which includes a body frame 21 formed in an approximately U-shape in a side view. A front fork 23 is operably supported on a head pipe provided at a front end of the body frame 21. A front wheel W_{F} is rotatably supported on forked ends of the front fork 23. A handlebar 24 is provided on an upper end of the front fork 23. A motor unit 31 having an electric motor 30 is provided on a lower portion of the body frame 21. A pair of right and left rear forked portions 25, 25 extend rearward, downward from the body frame 21 in a space over a rear portion of the motor unit 31 and further extend substantially in the horizontal direction in a space behind the motor unit 31. A rear wheel W_{R} is rotatably supported by the rear fork portions 25, 25 while being put therebetween. A pair of right and left stays 26, 26 are provided between both the rear forked portions 25, 25 and the rear portion of the body frame 21. A seat post 28 having at an upper end thereof a seat 27 is mounted to the rear portion of the body frame 21. Upper and lower positions of the seat 27 are adjustable. A rear carrier 29 is fixedly disposed on the rear side of the seat 27.

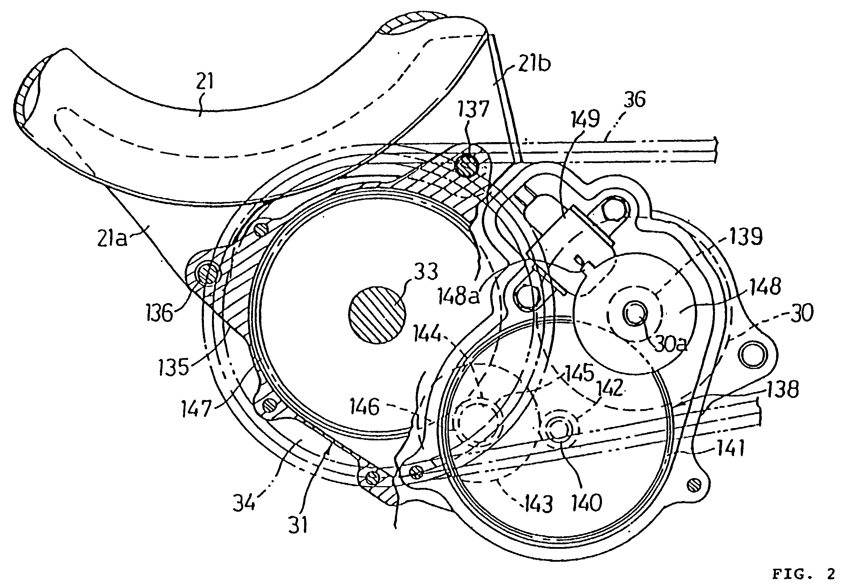

Referring to Figs. 1, 2, a casing 135 of the motor unit 31 is joined, by means of bolts 136, 137, to a pair of hanger portions 21a, 21b provided on a lower portion of the body frame 21. A crank shaft 33 having at both ends thereof crank pedals 32, 32 is rotatably supported by the casing 135. An endless chain 36 is wound around both a drive sprocket 34 and a driven sprocket 35 provided on an axle of the rear wheel W_{R}. The drive sprocket 34 transmits a power from the crank shaft 33, and also receives an assist force from the electric motor 30.

A power transmission system 138 is provided between the electric motor 30 and the drive sprocket 34 in a state being contained in the casing 135. The power transmission system 138 includes a drive gear 139, a first intermediate gear 141, a second intermediate gear 142, a third intermediate gear 143, a second idle shaft 144, a one-way clutch 145, a fourth intermediate gear 146, and a driven gear 147. The drive gear 139 is fixed on a rotating shaft 30a of the electric motor 30. The first intermediate gear 141, which meshes the drive gear 139, is fixed on one end of a first idle shaft 140. The first idle shaft 140 having an axial line parallel to the rotating shaft 30a is rotatably supported by the casing 135. The second intermediate shaft 142 is integrally provided on the first idle shaft 140. The third intermediate gear 143 meshes the second intermediate gear 142. The second idle shaft 144 having an axial line parallel to the first idle shaft 140 is rotatably supported by the casing 135 in such a manner as to be disposed coaxially with the third intermediate gear 143. The one-way clutch 145 is provided between the third intermediate gear 143 and the second idle shaft 144. The fourth intermediate gear I46 is integrally provided on the second idle shaft 144. The driven gear 147 meshes the fourth intermediate gear 146 and is connected to the drive sprocket 34.

In the power transmission system 138, a torque accompanied by operation of the electric motor 30 is decelerated and transmitted to the drive sprocket 34. When the electric motor 30 is stopped, the second idle shaft 144 is allowed to idle by action of the one-way clutch 145, so that rotation of the drive sprocket 34 due to a step-on force of the crank pedals 32, 32 is not obstructed.

Another power transmission system (not shown) is provided between the crank shaft 33 and the drive sprocket 34. The power transmission system includes a torsion bar and a one-way clutch. The torsion bar is twisted depending on an input torque from the input pedals 32, 32. The one-way clutch enables transmission of an input torque, which is generated when the crank shaft 33 is normally rotated by stepping-on of the crank pedals 32, 32, to the drive sprocket 34. The one-way clutch also allows reverse rotation of the crank shaft 33 when the crank shaft 33 is reversely rotated.

The operation of the electric motor 30 is controlled by a controller 37 which is positioned ahead of the motor unit 31 and fixedly supported on a lower portion of the body frame 21 as shown in Fig. 1. The controller 37 controls the operation of the electric motor 30 on the basis of a rotational speed of the electric motor 30 and an input torque of the input pedals 32, 32. As shown fully in Fig. 2, to detect the rotational speed of the electric motor 30, a reluctor 148 having a projection portion 148a on an outer peripheral thereof is fixed on the rotating shaft 30a of the electric motor 30 and an electromagnetic pick-up type sensor 149 for detecting the projecting portion 148a thereby detecting the reluctor 148, that is, the rotational speed of the electric motor 30 is mounted on the casing 135. An input torque of the input pedals 32, 32 is detected by a means (not shown) for detecting a torsional amount of the torsion bar of the power transmission system provided between the crank shaft 33 and the drive sprocket 34.

A basket 38 is mounted on the head pipe 22. A battery containing case 39, which is disposed on a back surface portion of the basket 38, is also mounted to the head pipe 22. A battery 40 for supplying a power to the electric motor 30 is insertably/removably contained in the battery containing case 39.

Incidentally, most of the body frame 21 is covered with a cover 41. A main switch 42 for supplying a power from the battery 40 to the controller 37 and the electric motor 30 is disposed on an upper portion of the cover 41.

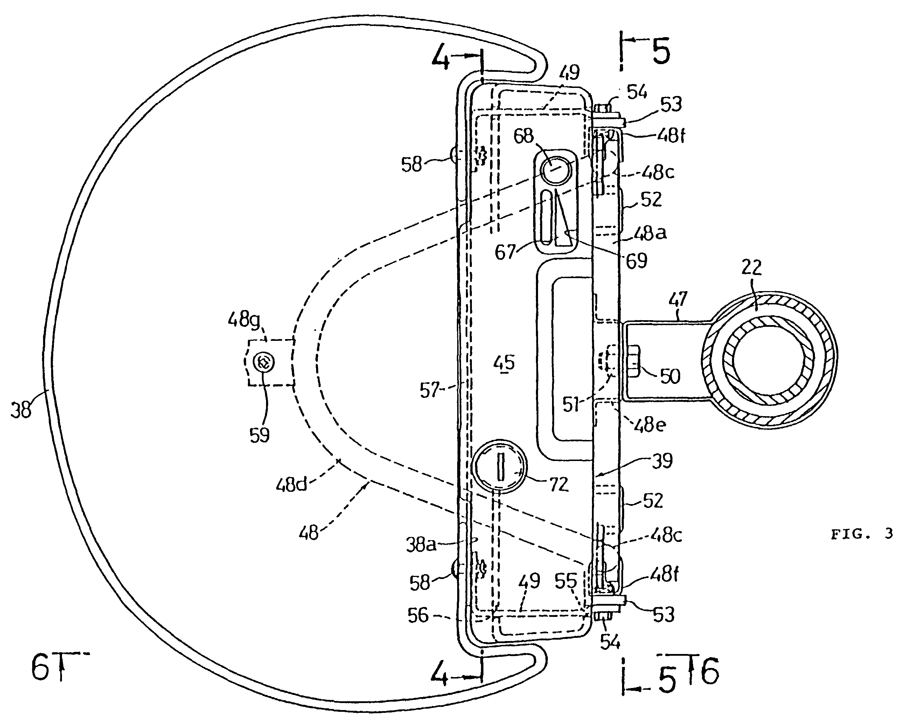

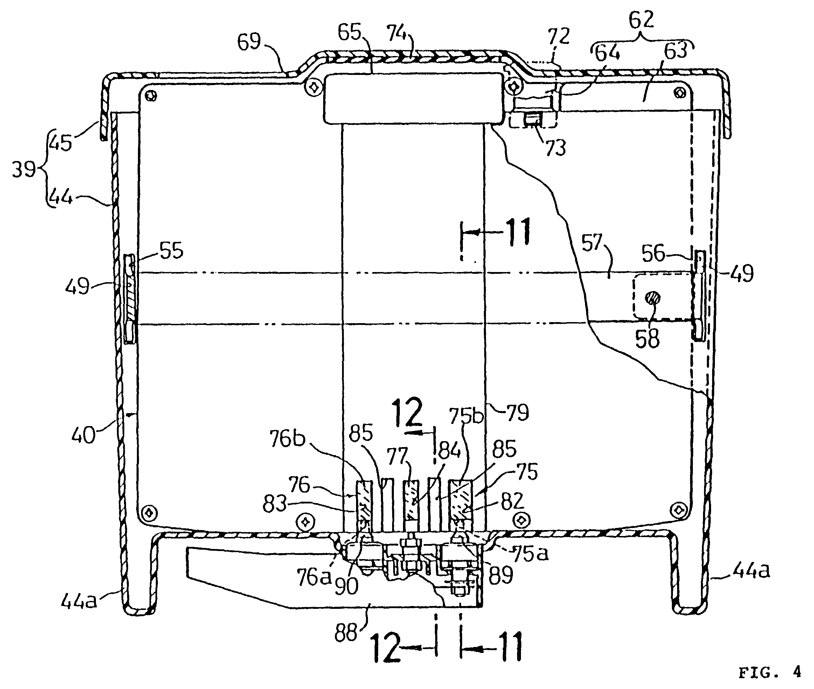

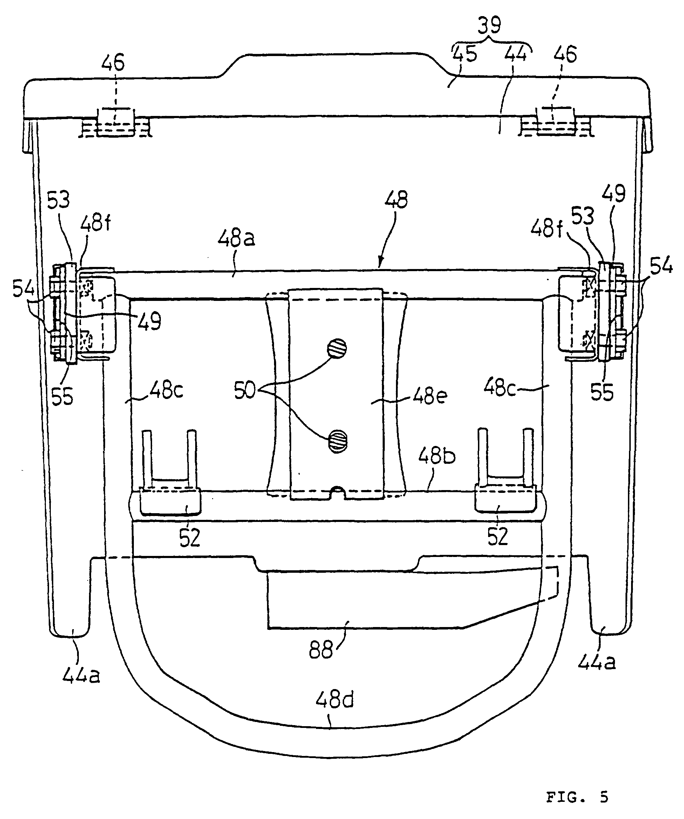

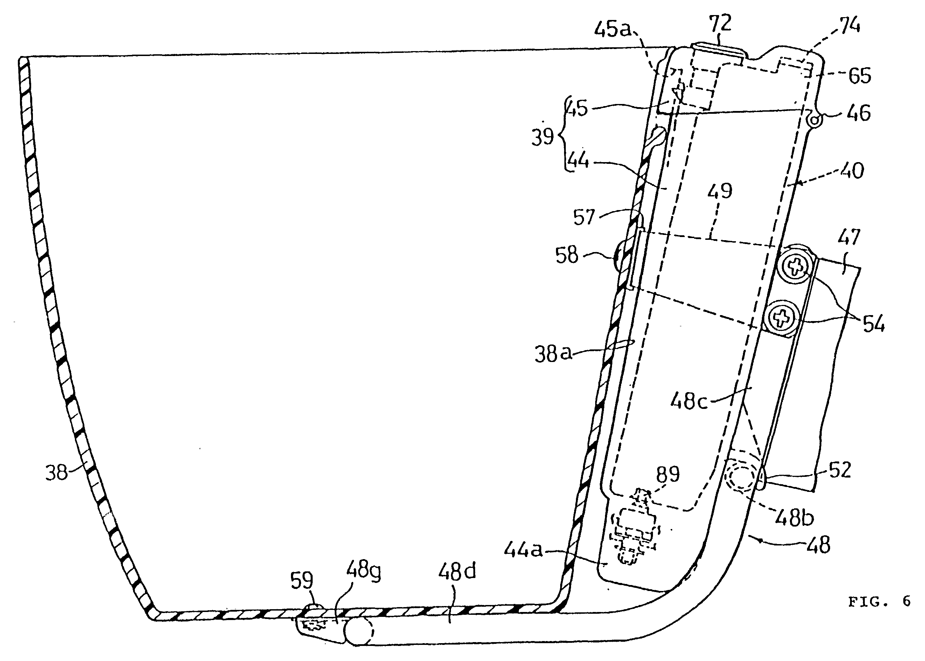

Referring to Figs. 3 to 7 in addition to Figs. 1, 2, a recessed portion 38a is provided in a back surface portion of the basket 38. The battery containing case 39 is disposed on the back surface portion of the basket 38 in such a manner as to be partially contained in the recessed portion 38a.

The battery containing case 39 is configured to insertably/removably contain the battery 40'in such a manner that the battery 40 can be removably inserted in the battery containing case 39 in the vertical direction identical to the direction along which a baggage is removably inserted in the basket 38. The battery containing case 39 includes a containing case main body 44 opened upward for insertably/removably containing the battery 40, and a lid 45 for openably closing the opening portion formed at an upper end of the containing case main body 44. The lid 45 is connected to a back surface portion at the upper end of the containing case main body 44 via a pair of pivots 46, 46.

A forward extending bracket 47 is mounted on the head pipe 22. The containing case main body 44 of the battery containing case 39 is fixedly supported on a supporting frame 48 mounted to the bracket 47. The basket 38 is fixedly supported by the supporting frame 48 and a pair of mounting stays 49, 49 fastened to the supporting frame 48.

The supporting frame 48 includes an upper supporting lever portion 48a, a lower supporting lever portion 48b, connecting lever portions 48c, 48c, a forward extending portion 48d, a mounting plate portion 48e, upper supporting plate portions 48f, 48f, and a lower supporting plate portion 48g. The upper supporting lever portion 48a extends substantially horizontally in the right and left direction of the body frame 21. The lower supporting lever portion 48b is separated downward from the upper supporting lever portion 48a and extends substantially horizontally in the right and left direction of the body frame 21. The connecting lever portions 48c, 48c connect both ends of the upper and lower supporting lever portions 48a, 48b and extend in the vertical direction. The forward extending portion 48d, which is formed in an approximately U-shape, is continuous at both ends thereof to lower ends of the connecting lever portions 48c, 48c and extend forward for supporting a bottom portion of the basket 38. The mounting plate portion 48e is provided between the upper supporting lever portion 48a and the lower supporting lever portion 48b. The upper supporting plate portions 48f, 48f are provided on connecting portions between both ends of the upper supporting lever portion 48a and the connecting lever portions 48c, 48c. The lower supporting plate portion 48g is provided at a front end of the forward extending portion 48d. The connecting lever portions 48c, 48c and the forward extending portion 48d are formed by bending one pipe. The upper ends of the connecting lever portions 48c, 48c are welded to both the ends of the upper supporting lever portion 48a formed of one pipe, and both ends of the lower supporting lever portion 48b formed of one pipe are welded to intermediate portions of the connecting lever portions 48c, 48c. The mounting plate portion 48e is fastened to the bracket 47 by two pairs of bolts 50, 50 and nuts 51, 51.

A pair of engagement portions 52, 52 and a pair of stays 53, 53 are integrally provided on the back surface of the containing case main body 44 of the battery containing case 39. Each of the engagement portions 52, 52 is formed in an approximately J-shape so to be engaged from top with the lower supporting lever portion 48b of the supporting frame 48. The mounting stays 53, 53 faces, from the outside, to the upper supporting plate portions 48f, 48f of the supporting frame 48. Each of the above-described mounting stays 49, 49 fastened to the supporting frame 48 is formed in approximately L-shape with a front end portion thereof being bend at right angles. A rear end portion of the mounting stay 49 and the stay 53 of the containing case main body 44 are fastened to each of the upper supporting plate portions 48f, 48f by a pair of screw members 54, 54.

The mounting stays 49, 49 with the rear end portions fastened to the upper supporting plate portions 48f, 48f pass through the containing case main body 44 and extend up to the front side of the containing case main body 44. Specifically, each of a rear wall and a front wall of the containing case main body 44 has a pair of rectangular holes 55, 56, and'the mounting stays 49, 49 extend forward through the holes 55, 55 and 56, 56. A back surface of the basket 38 as well as both ends of a crossmember 57 extending between both front end portions of the mounting stays 49, 49 are fastened to the front end portions of the mounting stays 49, 49 by screw members 58, 58. The bottom portion of the basket 38 is fastened to the lower supporting plate portion 48g of the supporting frame 48 by a screw member 59.

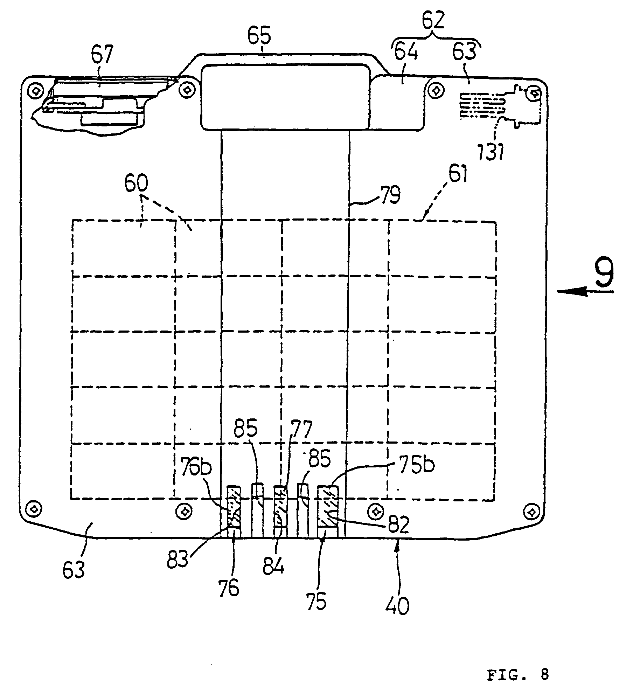

Referring to Figs. 8 to 10, the battery 40 includes a battery case 62 and a cell assembly 61 contained in the battery case 62. The cell assembly 61 is composed of a number of Ni-Cd cells 60 connected in series. The battery case 62, which is composed of a front case half 63 and a rear case half 64 connected to the front case half 63, is formed into such a flat, rectangular box-shape as to be vertically insertable in the containing case main body 44 of the battery containing case 39.

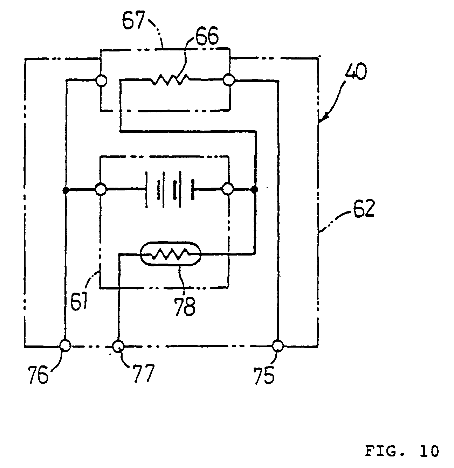

A grasp portion 65 continuous to the rear case half 64 is provided on an upper surface of the battery case 62 in such a manner as to be raised upward at a widthwise central portion of the battery case 62. A residual power indicator 67 containing a shunt resistor 66 (see Fig. 10) is also provided on the upper surface of the battery case 62 at a position offset to one side of the battery case 62 from the grasp portion 65. A push button 68 for operating the residual power indicator 67 is disposed on an upper surface of the residual power indicator 67. The push button 68 is depressed in the vertical direction.

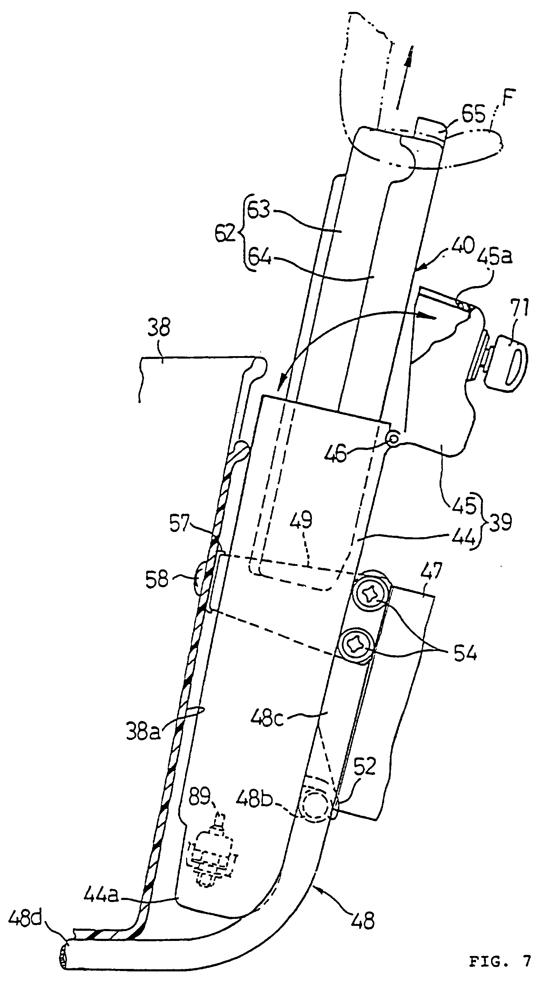

A cutout portion 45a is provided in a front portion of the lid 45 of the battery containing case 39. The cutout portion 45a prevents a finger F grasping the grasp portion 65 of the battery 40 from being caught by the lid 45 when the lid 45 is opened for insertably/removably containing the battery 40 in the battery containing case 39 as shown in Fig. 7. The lid 45 has a window 69 allowing visual observation of the residual power indicator 67 from top and also allowing operation of the push button 68 in a state in which the opening portion formed at the upper end of the containing case main body 44 is closed.

The lid 45 has a locking means 72 to be engaged in a locking hole 73 provided in an upper portion of the front surface side of the containing case main body 44. The engagement of the locking means 72 in the locking hole 73 and the releasing of the engagement are switched each other by a key 71. Thus, after the battery 40 is contained in the containing case main body 44 and the opening portion formed at the upper end of the containing case main body 44 is closed by the lid 45, the lid 45 can be locked by the locking means 72. An elastic member 74 is stuck on an inner surface of the lid 45. When the battery 40 is contained in the containing case main body 44 and then the opening portion formed at the upper end of the containing case main body 44 is closed by the lid 45, the elastic member 74 is brought in contact with the grasp portion 65 of the battery 40 and thereby the battery 40 is elastically held in the battery containing case main body 39. This makes it possible to effectively absorb vibration of the battery 40 in the battery containing case main body 39 in a running state and to keep a stable connection between the battery 40 and discharging terminals 89, 90 which will be described later.

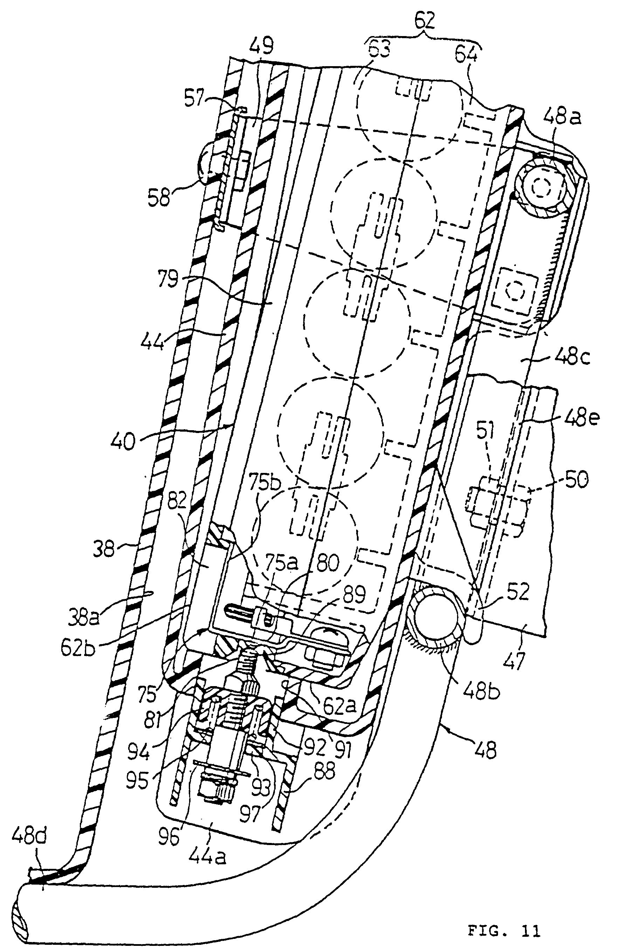

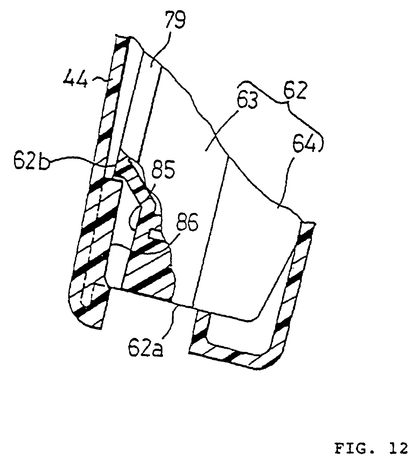

Referring to Figs. 11 and 12, in addition to the previous figures, the battery 40 includes first to third connecting terminals 75, 76, 77. The first connecting terminal 75 is connected to a minus terminal side of the cell assembly 61 through the shunt resistor 66. The second connecting terminal 76 is connected to a plus terminal side of the cell assembly 61. The third connecting terminal 77 is connected to the minus terminal side of the cell assembly 61 through a thermistor 78 for detecting a temperature of the cell assembly 61.

A vertically extending guide portion 79 is provided on the front surface side, that is, on the front case half 63 of the battery case 62 of the battery 40 in such a manner as to project forward from a widthwise central portion of the front case half 63. The connecting terminal 75, 76, 77 are disposed in the battery case 62 at a corner portion at which a bottom wall surface 62a of the battery case 62 crosses a front wall surface of the guide portion 79, that is, a front wall surface 62b of the battery case 62.

The first connecting terminal 75, which is formed into an approximately L-shape having a relatively wide width, has a flat-shaped terminal plate 80, a discharging contact 75a, and a flat-shaped charging contact 75b. The terminal plate 80 is brought in elastic-contact with an inner surface of the bottom portion of the battery case 62 with a rear end side thereof fixed. The discharging contact 75a is joined to a lower surface of the terminal plate 80 by rivetting. The charging contact 75b is continuous to a front end of the terminal plate 80 in such a manner as to be bent at right angles therefrom, and it is brought in elastic-contact with an inner surface of the front portion of the battery case 62. The discharging contact 75a is made of silver, and the charging contact 75b is subjected to nickel (or silver) plating.

The first connecting terminal 75 is disposed at a position corresponding to one side of the guide portion 79 in the width direction. The bottom wall of the battery case 62 has a circular opening portion 81 through which the discharging contact 75a faces to the bottom wall surface 62a. The guide portion 79 has a slit 82 through which the charging contact 75b faces to the front wall surface 62b. The slit 82 extends longer in the vertical direction with an upper end thereof closed and an upper end thereof opened.

The second connecting terminal 76 has a discharging contact 76a and a charging contact 76b, and is formed into an approximately L-shape similar to but narrower in width than that of the first connecting terminal 75. The second connecting terminal 76 is disposed at a position corresponding to the other side of the guide portion 79 in the width direction. The bottom wall of the battery case 62 has a circular opening portion (not shown) through which the discharging contact 76a faces to the bottom wall surface 62a. The guide portion 79 has a slit 83 through which the charging contact 76b faces to the front wall surface 62b. The slit 83 extends longer in the vertical direction with an upper end thereof closed and a lower end thereof opened.

The third connecting terminal 77 is formed into an approximately L-shape similarly to the first connecting terminal 75 and the second connecting terminal 76, but it has not any contact facing to the bottom wall surface 62a of the battery case 62. The third connecting terminal 77 is disposed in the battery case 62 at a position between the first connecting terminal 75 and the second connecting terminal 76. The guide portion 79 has a slit 84 through which the third connecting terminal 77 faces to the front wall surface 62b. The slit 84 extends longer in the vertical direction with an upper end thereof closed and a lower end thereof opened.

Guide grooves 85, 85 are provided between the slits 82, 84 and between the slits 83, 84. Each of the guide grooves 85, 85 extends longer in the vertical direction with an upper end thereof closed and an upper end thereof opened. Fitting projecting portions 86, ..., 86 are provided on a lower portion of the guide portion 79 on the inner surface side. The fitting projecting portions 86, ..., 86 are fitted from bottom into the guide grooves 85, 85 for positioning the battery 40 in the containing case main body 44 in the width direction.

A terminal box 88 is mounted on the bottom portion of the containing case main body 44. The terminal box 88 contains a first discharging terminal 89 and a second discharging terminal 90. The first discharging terminal 89 is connected to the discharging contact 75a of the first connecting terminal 75 of the battery 40 contained in the battery containing case 39. The second discharging terminal 90 is connected to the discharging contact 76a of the second connecting terminal 76 of the battery 40.

The bottom portion of the containing case main body 44 has an opening portion 91 corresponding to the opening portion 81. The opening portion 81 is, as described above, formed in the bottom wall of the battery case 62 at a position corresponding to that of the discharging contact 75a of the first connecting terminal 75. The terminal box 88 is provided with a terminal supporting portion 92 formed into a bottoming cylinder shape. An upper end portion of the terminal supporting portion 92 is fitted in the opening portion 91, and a lower end portion thereof has an end plate 93. The first discharging terminal 89, which is formed into a rod shape, axially movably passes through the end plate 93 and is coaxially disposed in the terminal supporting portion 92. A retainer 94 slidably fitted in the terminal supporting portion 92 is fixed to an intermediate portion of the first discharging terminal 89. A spring 95 is contractedly provided between the retainer 94 and a washer 97 being in contact with an inner surface of the end plate 93. The upper end of the first discharging terminal 89 is thus elastically biased in the direction along which it comes in contact with the discharging contact 75a of the first connecting terminal 75. On the other hand, a snap ring 96 is fitted around the lower end portion of the first discharging terminal 89. The snap ring 96 is brought in contact with a lower surface of the end plate 93 and thereby restricts the upper movement of the first discharging terminal 89.

The above structure of disposing the first discharging terminal 89 into the terminal box 88 has the following advantage. Namely, when the battery 40 is contained in the containing case main body 44, the upper end of the first discharging terminal 89 is brought in elastic-contact with the discharging contact 75a of the first connecting terminal 75, so that the contact between the discharging contact 75a and the first discharging terminal 89 can be effectively kept even when the battery 40 is vibrated during running of the bicycle.

The second discharging terminal 90 is disposed in the terminal box 88 in the same manner as that for the first discharging terminal 89. Namely, when the battery 40 is contained in the containing case main body 44, the upper end of the second discharging terminal 90 is brought in elastic-contact with the discharging contact 76a of the second connecting terminal 76, so that the contact between the discharging contact 76a and the second discharging terminal 90 can be effectively kept even when the battery 40 is vibrated during running of the bicycle.

The first and second discharging terminals 89, 90 are connected to respective cords for supplying a power to the electric motor 30. These cords are led from the terminal box 88. To cover both sides of the terminal box 88 for preventing the terminal box 88 from being viewed from the exterior, cover portions 44a, 44a extending downward are integrally provided on both sides of the lower end of the containing case main body 44, thereby giving a preferable appearance.

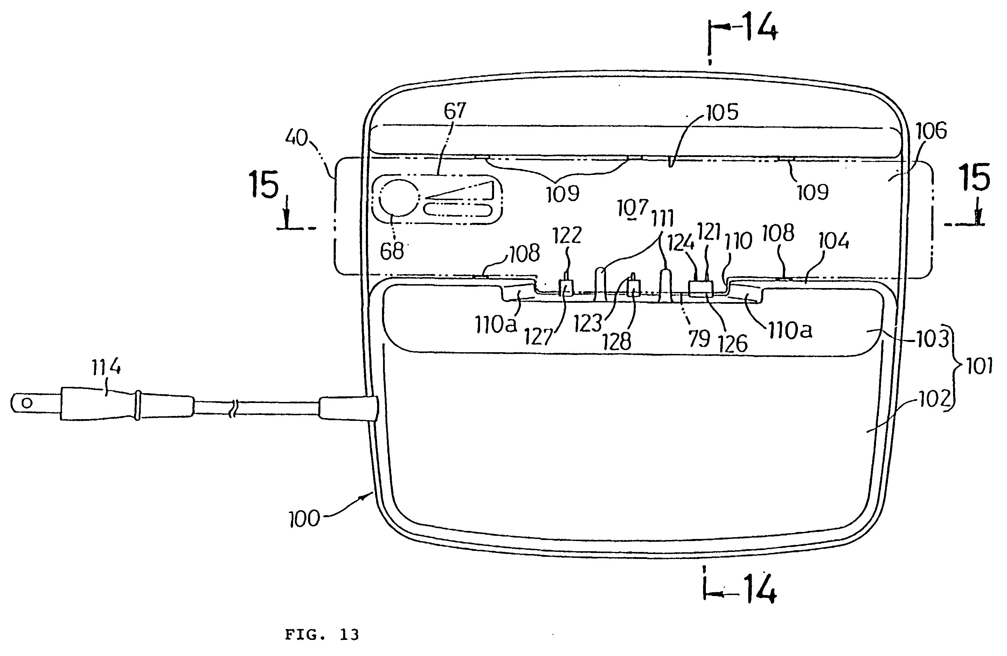

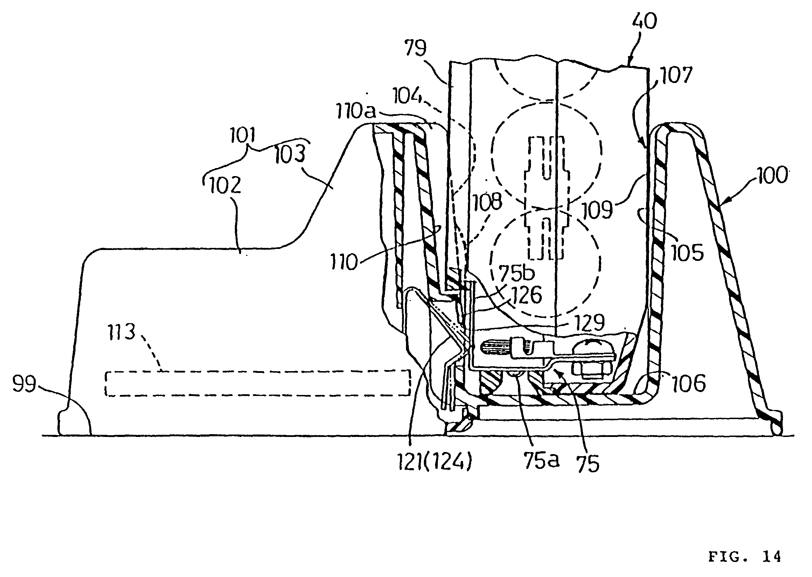

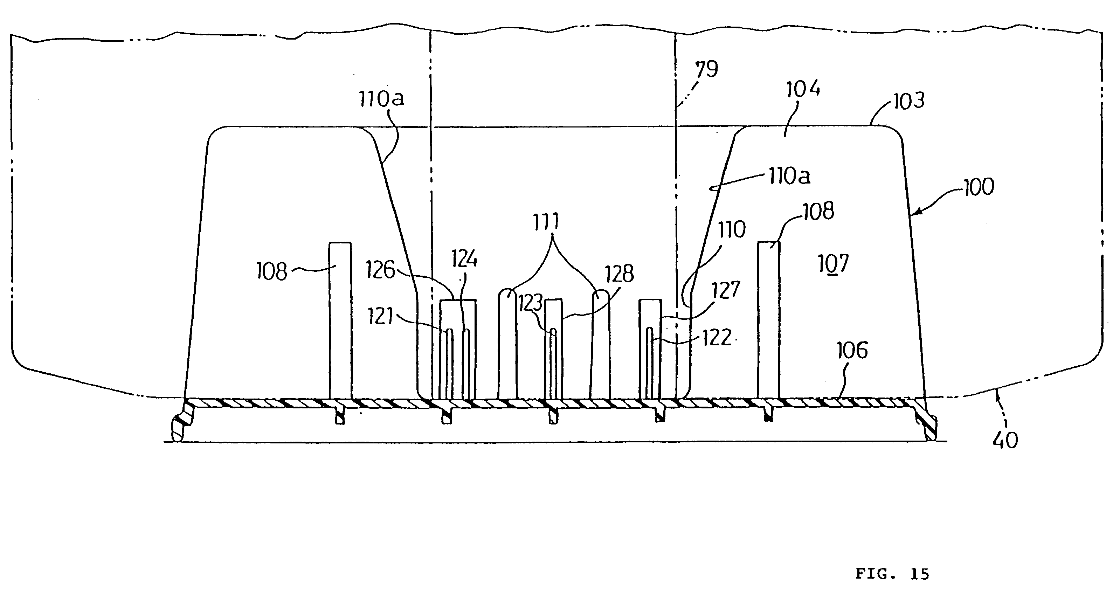

Referring to Figs. 13 to 15, there is shown a charger 100 for charging the battery 40 having taken out from the battery containing case 39. The charger 100 can removably mount the battery 40 in the same direction as the direction along which the battery 40 is insertably/removably contained in the battery containing case 39, that is, in the vertical direction.

A main body 101 of the charger 100, which is placed on a flat floor surface 99, is formed from a synthetic resin into an approximately rectangular box-shape being narrower in width than the battery 40. The main body 101 has a low level portion 102 having a relatively low level from the floor surface 99, and a high level portion 103 having a level higher than the low level portion 102 and continuous to the low level portion 102.

The high level portion 103 has a mounting groove 107 opened upward and sideward. The mounting groove 107 is surrounded by a vertical extending side surface 104 positioned on the low level portion 102 side, a vertical extending side surface 105 positioned opposite to the side surface 104, and a horizontal bottom surface 106 connecting both lower ends of the side surfaces 104, 105 to each other. The mounting groove 107 is designed to allow the battery 40 to be mounted from top into the mounting groove 107. More specifically, the size of the bottom surface 106 of the mounting groove 107 is set such that the push button 68 of the residual power indicator 67 disposed on the upper surface of the battery 40 is located at least at a position corresponding to the bottom surface 106 when the battery 40 is mounted in the mounting groove 107.

The side surfaces 104, 105 of the mounting groove 107 are formed into a tapered shape as seen from top for allowing easy mounting of the battery 40 in the mounting groove 107. A pair of ribs 108, 108 extending longer in the vertical direction are projectingly provided on a lower portion of the side surface 104 which faces to the front surface of the battery 40 when the battery 40 is mounted in the mounting grooves 107. The ribs 108, 108 are brought in contact with the front surface of the battery 40 on both the sides of the guide portion 79 formed on the front surface of the battery 40. A plurality of (for example, three pieces) of ribs 109, ..., 109 are projectingly provided on the side surface 105 which faces to the rear surface of the battery 40 when the battery 40 is mounted in the mounting groove 107. The ribs 109, ..., 109 extends between upper and lower ends of the side surface 105 and can be brought in contact with the rear surface of the battery 40. The ribs 108, ..., 108 and 109, ..., 109 are formed into a tapered shape as seen from top just as the side surfaces 104, 105. Tilting angles of the ribs 108, ..., 108 and 109, ..., 109, however, are set to be smaller than those of the side surfaces 104, 105. The tilting of the side surfaces 104, 105 and the ribs 108, ..., 108 and 109, ..., 109 allows easy mounting/dismounting of the battery 40 into/from the mounting groove 107. Also, the front and rear surfaces of the battery 40 are effectively supported by the ribs 108, ..., 108 and 109, ..., 109 tilted at the tilting angles smaller than those of the side surfaces 104, 105, so that the battery 40 in the mounting groove 107 can be prevented from being loosened back and fourth.

A guiding recessed portion 110 opened upward is provided in the side surface 104. The guide portion 79 projectingly provided on the battery case 62 of the battery 40 can be removably inserted from top into the guiding recessed portion 110. Both side surfaces 110a, 110a of an upper portion of the guiding recessed portion 110 are formed into a tapered shape as seen from top for allowing easy insertion of the guide portion 79 into the guiding recessed portion 110.

Fitting projecting portions 111, 111 are projectingly provided on an inner surface of the guiding recessed portion 110. The fitting projecting portions 111, 111 are fitted in the guide grooves 85, 85 formed in the front surface portion of the battery 40. The battery 40 in the mounting groove 107 can be prevented from being loosened in the axial direction by fitting of the fitting projecting portions 111, 111 in the guide grooves 85, 85.

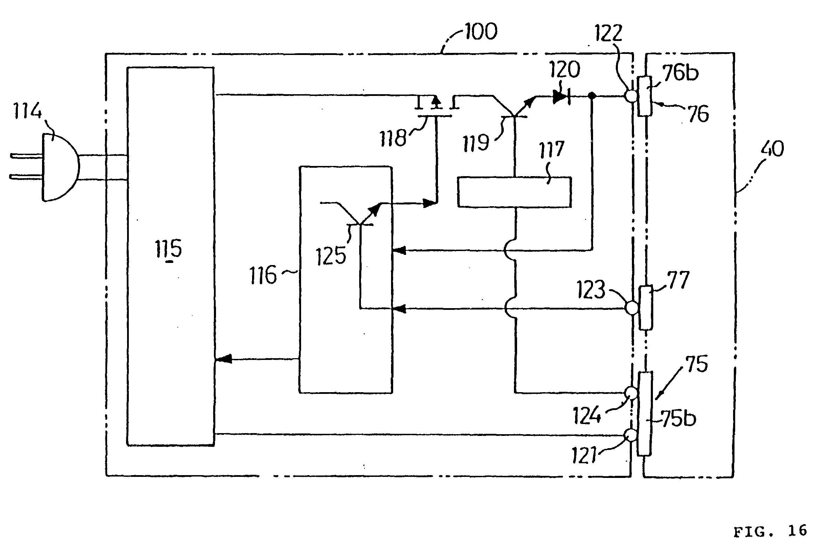

Referring to Fig. 16, the charger 100 includes a power supply circuit 115 connected to an A. C. power supply through a connector 114, a control circuit 116 composed of a microcomputer, a drive circuit 117, a MOS-FET 118, a transistor 119, a diode 120, and the like.

A first charging terminal 121 is connected to one end of the power supply circuit 115. A second charging terminal 122 is connected to the other end of the power supply circuit 115 through the MOS-FET 118, transistor 119 and diode 120. The control circuit 116 has a transistor 125 connected to a gate of the MOS-FET 118, and a base of the transistor 125 is connected to a thermistor terminal 123. A control signal for switching a current is supplied from the control circuit 116 to the power supply circuit 115, and a voltage signal of the second charging terminal 122 is inputted in the control circuit 116. An output terminal of the drive circuit 117 is connected to a base of the transistor 119 for controlling operation/cutoff of the transistor 119. A battery detecting terminal 124 is connected to an input terminal of the drive circuit 117.

A substrate 113 is contained in the main body 101 at a position sideward from the lower portion of the battery 40 mounted in the mounting groove 107. More specifically, the substrate 113 is contained both in the low level portion 102 and in part of the high level portion 103 on the low level portion I02 side from the mounting groove 107. The electric parts shown in Fig. 16 are mounted on the substrate 113. Since the substrate 113 is contained in the main body 101 at a position sideward from the lower portion of the battery 40 mounted in the mounting groove 107, the mounting position of the battery 40 in the charger 100 can be made as low as possible. This makes it possible to stabilize the mounting state of the battery 40 in the charger 100.

Projecting portions 126, 127, 128 are provided on the lower portion of the guiding recessed portion 110 provided in the side surface 104 of the mounting groove 107. The projecting portions 126, 127, 128 are fitted in the slots 82, 83, 84 formed in the front surface portion of the battery 40, respectively. Each of the first charging terminal 121 and the battery detecting terminal 124 is formed of a wire. Bent portions of both the terminals 121, 124 project from an opening portion 129 provided in the projecting portion 126 in order that they are elastically brought in sliding-contact with the charging terminal 75b of the first connecting terminal 75 when the battery 40 is mounted in the mounting groove 107. The second charging terminal 122 formed of a wire projects from the projecting portion 127 in order that it is elastically brought in sliding-contact with the charging terminal 76b of the second connecting terminal 76 when the battery 40 is mounted in the mounting groove 107. The thermistor terminal 123 formed of a wire projects from the projecting portion 128 in order that it is elastically brought in sliding-contact with the third connecting terminal 77 when the battery 40 is mounted in the mounting groove 107.

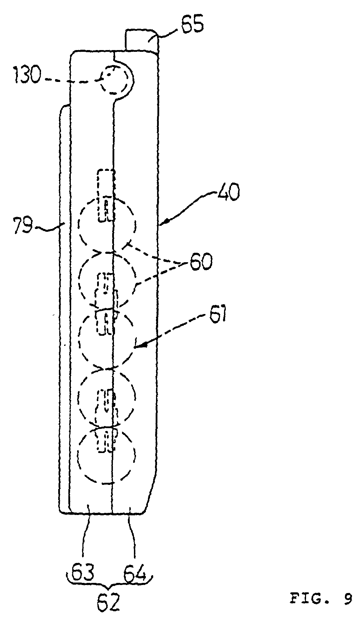

The description has been made of the example where the charging of the battery 40 is performed in the state that the battery 40 is mounted in the charger 100; however, in some cases, the charging of the battery 40 is required to be performed in a state that the battery 40 is connected to a connector connected to a D. C. power supply. In consideration of such a case, as shown by a broken line of Fig. 9, a recessed portion 130 may be previously in an inner side surface of an upper portion of the battery case 62 of the battery 40 for making easy formation of an opening portion. Thus, as shown by a chain line of Fig. 8, a connector 131 can be provided in the battery case 62 at a position corresponding to the recessed portion 130.

The function of the first embodiment will be described below. The battery containing case 39 is fixedly disposed on the back surface portion of the front basket 38 mounted on the head pipe 22 and the battery 40 is insertably/removably contained in the battery containing case 39 in the vertical direction. As a result, it becomes possible to extremely easily perform mounting/dismounting of the battery 40 into/from the motor-assisted bicycle just as insertion/removal of a baggage into/from the front basket 38.

The residual power indicator 67 is provided on the upper surface of the battery case 62 of the battery 40 and the window 69 allowing visual observation of the residual power indicator 67 from top is provided in the lid 45 of the battery containing case 39. As a result, the rider can easily visually observe the residual power indicator 67 and easily confirm the residual power of the battery 40 even in a state in which he sits on the seat 27. The residual power is indicated on the residual power indicator 67 only when the push button 68 is depressed. Accordingly, the residual power indicator 67 does not waste power and also it does not obstruct the view of the rider during running of the bicycle.

The first and second connecting terminals 75, 76 provided on the battery 40 are commonly used for charging and discharging. Consequently, as compared with a battery provided with connecting terminals specialized for charging and discharging, the number of parts can be reduced and the wiring structure in the battery case 62 can be simplified.

A current flowing upon discharging the battery 40, that is, upon feeding a power to the electric motor 30 is relatively large, while a current flowing upon charging the battery 40 is relatively small. Accordingly, in the case where discharging terminals and charging terminals are electrically connected to the same portions of the first and second connecting terminals 75, 76, electric capacitances of both the connecting terminals 75, 76 must be set at larger values and also electric capacitances of charging terminals of the charger 100 must be set at larger values. However, according to this embodiment, since the discharging contacts 75a, 76a connected to the first and second discharging terminals 89, 90 are disposed on the first and second connecting terminals 75, 76 at positions different from those at which the charging contacts 75b, 76b connected to the first and second charging contacts 121, 122 are disposed, and consequently, even when the first and second connecting terminals 75, 76 are commonly used for charging and discharging, they can satisfy electric characteristics necessary for charging and discharging. Specifically, upon discharging the battery 40 in which a large current flows, the discharging contacts 75a, 76a composed of silver contacts are brought in elastic-contact with the first and second discharging terminals 89, 90 in the same pressing direction, so that it is possible to reduce a wear due to the contact therebetween and hence to cope with a large-current flowing condition. On the other hand, upon charging the battery 40 the battery 40 in which a small current flows, the first and second charging terminals 121, 122 formed of wires wipe the charging contacts 75b, 76b upon insertion of the battery 40 to clean dust adhering on the surface of the charging contacts 75b, 76b, so that it is possible to prevent occurrence of contact failure and hence to cope with a small-current flowing condition.

The discharging contacts 75a, 76a of the first and second connecting terminals 75, 76 are disposed in such a manner as to face to the bottom wall surface 62a of the battery case 62 of the battery 40 while the charging contacts 75b, 76b are disposed in such a manner as to face to the front wall surface 62b perpendicular to the bottom wall surface 62a, and accordingly, it is possible to prevent occurrence of connection error upon charging and discharging.

The battery 40 is mounted in the charger 100 in the same direction as the direction along which it is insertably/removably contained in the battery containing case 39 mounted on the vehicle, that is, in the vertical direction, and the battery 40 is charged by mounting of the battery 40 in the charger 100. This makes it possible to eliminate a connecting work upon charging and hence to make easy the charging work.

The terminals 121 to 124 are disposed on the side surface 104 which is a wall surface different from a wall surface applied with a dead weight of the battery 40 when the battery 40 is mounted in the charger 100, that is, the bottom surface 106 of the mounting groove 107, and they are connected to the charging contacts 75b, 76b and the third connecting terminal 77 facing to the front surface side of the battery 40. Accordingly, it is possible to prevent the terminals 121 to 124 from being applied with the relatively heavy dead weight of the battery 40 and hence to reduce the weights and sizes of the terminals 121 to 124 of the charger 100.

The residual power indicator 67, which is provided on the upper surface of the battery 40, can be visually observed from top when the battery 40 is mounted in the charger 100. Further, since the push button 68 for operating the residual power indicator 67 can be operated in the vertical direction, it is possible to prevent the terminal 121 to 124 from being applied with any force in the contact releasing direction by the operation of the push button 68.

A second embodiment of the invention is now described and shown in Figs.17 to 24.

Referring to Figs. 17 to 24, a basket 238 is mounted on a head pipe 22. A battery containing case 239 disposed on a back surface portion of the basket 238 is also mounted on the head pipe 22. A battery 240 for supplying a power to an electric motor 30 (see Figs. 1, 2) is insertably/removably contained in the battery containing case 239.

Swelled portions 238b, 238b are integrally formed on both sides of a rear portion of the basket 238 in such a manner as to be swelled on both sides of the battery containing case 239. A recessed portion 238a for containing part of the battery containing case 239 is formed between both the swelled portions 238b, 238b.

The battery containing case 239 insertably/removably contains the battery 240 in the same vertical direction as the direction along which a baggage is removably inserted into the basket 238. The battery containing case 239 is composed of a containing case main body 244 opened upward for insertably/removably containing the battery 240, and a lid 245 for openably closing an opening portion provided at an upper end of the containing case main body 244. The lid 245 is connected to a back surface portion of the upper end portion of the containing case main body 244 via a pivot 246.

A bracket 47 extending forward is mounted on the head pipe 22. The containing case main body 244 of the battery containing case 239 is fixedly supported on a supporting frame 248 mounted on the bracket 47. The basket 238 is fixedly supported on the supporting frame 248 and a stay 249 fastened to the supporting frame 248.

The supporting frame 248 includes an upper supporting lever portion 248a, a lower supporting lever portion 248b, connecting lever portions 248c, 248c, forward extending portions 248d, 248d, a mounting plate portion 248e, upper supporting plate portions 248f, 248f, a forward supporting plate portion 248g, and lower supporting plate portions 248h, 248h. The upper supporting lever portion 248a extends substantially horizontally in the right and left direction of the body frame 21 (see Fig. 1). The lower supporting lever portion 248b is spaced downward from the upper supporting lever portion 248a and extends substantially horizontally in the right and left direction of the body frame 21. The connecting lever portions 248c, 248c connect both ends of the upper supporting lever portion 248a and the lower supporting lever portion 248b to each other and extend in the vertical direction. The forward extending portions 248d, 248d extend obliquely, forward from lower ends of the connecting lever portions 248c, 248c in the direction where they come closer to each other for supporting a bottom portion of the basket 238. The mounting plate portion 248e is provided between the upper supporting lever portion 248a and the lower supporting lever portion 248b. The upper supporting plate portions 248f, 248f are provided on upper ends of the connecting lever portions 248c, 248c. The forward supporting plate portion 248g is provided between front ends of the forward extending portions 248d, 248d. The lower supporting plate portions 248h, 248h are provided on connecting portions between both ends of the lower supporting lever portion 248b and both the connecting lever portions 248c, 248c.

The upper supporting lever portion 248a, connecting lever portions 248c, 248c, and forward extending lever portions 248d, 248d are formed by bending one pipe. Both the ends of the lower supporting lever portion 248b formed of one pipe are welded to lower portions of the connecting lever portions 248c, 248c. The mounting plate portion 248e is fastened to the bracket 47 by two pairs of bolts 250, 250 and nuts 251, 251.

The containing case main body 244 of the battery containing case 239, which is formed of a synthetic resin or the like into a box-shape opened upward, is composed of a front case half 241 and a rear case half 242. The front case half 241 and the rear case half 242 are fastened to each other in such a manner as to be able to be divided back and forth. Flange portions 241a, 241a extending in the vertical direction are integrally formed on both sides of a rear portion of the front case half 241 in such a manner as to project outward therefrom. Besides, flange portions 242a, 242a are provided on upper portions on both sides of a front portion of the rear case half 242 in such a manner as to opposed to rear surfaces of the flange portions 241a, 241a. Flange portions 241b, 242b, opposed to each other, are integrally provided on lower portions of the front case half 241 and the rear case half 242, respectively.

A metal stay 249 is disposed in such a manner as to be brought in contact with a front surface of the front case half 241. The metal stay 249 has such a shape as to substantially correspond to a shape of an upper portion of the front surface of the front case half 241, and it extends in the width direction of the body frame 21. The flange portions 241a, 241a and the flange portions 242a, 242a, being in contact with each other, are held between both ends of the stay 249 and the upper supporting plate portions 248f, 248f of the supporting frame 248. By fastening both the ends of the stay 249 and the upper supporting plate portions 248f, 248f using bolts 252, 252 and nuts 253, 253, the stay 249 is fixed to the supporting frame 248 and also the flange portions 241a, 241a and the flange portions 242a, 242a fastened to each other are fixedly supported on the supporting frame 248. The flange portions 241b, 242b, being in contact with each other, are fastened to the lower supporting plate portions 248h, 248h of the supporting frame 248 by bolts 254, 254 and nuts 255, 255.

The front case half 241 and the rear case half 242 are fastened to each other into the containing case main body 244, and further they are fixedly supported on the supporting frame 248. A rear surface portion of the rear case half 242 is fastened to the mounting plate portion 248e of the supporting frame 248 by a screw member 257.

Cover walls 242c, 242c, each being formed in an arcuate shape in transverse cross-section, are formed on either of the front and rear case halves 241, 242 (rear case half 242, in this embodiment). The cover walls 242c, 242c cover both connecting portions of both the case halves 241, 242 from the outside and are brought in contact with rear ends of the swelled portions 238b, 238b of the basket 238. The cover wall 242c, 242c extend longer in the vertical direction for substantially covering a terminal box 88 mounted on a bottom portion of the containing case main body 244. The connection portions of both the case halves 241, 242 are covered with the cover walls 242c, 242c substantially over the entire lengths in the vertical direction.

Further, the flange portions 242a, 242a are integrally formed on the cover walls 242c, 242c, and recessed portions 258, 258 for allowing the flange portions 242a, 242a to face to the rear side are provided in the cover walls 242c, 242c.

Connecting cylindrical portions 242d, 242d are integrally provided on the lower portions of the cover walls 242c, 242c on both the sides of the rear case half 242. The connecting cylindrical portions 242d, 242d extend forward in such a manner that front ends thereof are brought in contact with the flange portions 241a, 241a of the front case half 241. The flange portions 241a, 241a of the front case half 241 are fastened to the front ends of the connecting cylindrical portions 242d, 242d by screw members 256, 256. However, the screw members 256, 256 and the connecting cylindrical portions 242d, 242d exhibit only a function of temporarily fixing both the case halves 241, 242 to each other.

A bottom portion of the basket 238 is fastened to the forward supporting plate portion 248g of the supporting frame 248 by a pair of screw members 259, 259. In the basket 238, the swelled portions 238b, 238b swelled on both the sides of the battery containing case 239 are fastened to both ends of the stay 249 by weld nuts 260, 260 fixed to both the ends of the stay 249 and screw members 261, 261 screwed with the weld nuts 260, 260. That is, both the swelled portions 238b, 238b are fixedly fastened to the supporting frame 248 through the stay 249.

A rib 243 is integrally provided on the upper portion of the front surface of the front case half 241 of the containing case main body 244 in such a manner as to project outward therefrom. The rib 243 is brought in contact with the recessed portion 238a formed in the rear potion of the basket 238 and thereby it allows the basket 238 to be spaced from the front case half 241 at a specified distance.

The battery 240 is composed of a battery case 262 containing a cell assembly 61 composed of a number of Ni-Cd cells 60, ..., 60 connected in series. The battery case 262 has a first case half 263 and a second case half 264 connected to each other. The battery case 262 is formed in such a flat, rectangular box-shape as to be able to be insertably/removably contained in the containing case main body 244 of the battery containing case 239.

A grasp portion 265 continuous to the second case half 264 is provided on an upper surface of the battery case 262. The grasp portion 265 is raised upward at a widthwise central portion of the battery case 262. A residual power indicator 67 is also provided on the upper surface of the battery case 262 at a position offset to one side from the grasp portion 265. A push button 68 for operating the residual power indicator 67 is disposed on an upper surface of the residual power indicator 67. The push button 68 is depressed in the vertical direction. The lid 245 has a window 69 allowing visual observation of the residual power indicator 67 from top and also allowing operation of the push button 68 in a state in which the opening portion formed at the upper end of the containing case main body 244 is closed.

The lid 245 has a locking means 72 to be engaged in a locking hole 73 provided in an upper portion of the front surface side of the containing case main body 244, that is, in an upper portion of the front side of the front case half 241. The engagement of the locking means 72 in the locking hole 73 and the releasing of the engagement are switched each other by a key 71. Thus, after the battery 240 is contained in the containing case main body 244 and the opening portion formed at the upper end of the containing case main body 244 is closed by the lid 245, the lid 245 can be locked by the locking means 72.

A guide portion 265 projecting forward is provided at a widthwise central portion on the front surface side of the battery case 262 of the battery 240, that is, on the first case half 263 in such a manner as to extend in the vertical direction. Like the battery case 62 of the battery 40 of the first embodiment, first to third connecting terminals 75, 76 and 77 are disposed in the battery case 262. A connecting structure between the first to third connecting terminals 75, 76, 77 and the terminal box 88 mounted on the bottom portion of the containing case main body 244, and a connecting structure between the first to third connecting terminals 75, 76, 77 and the charger 100 having fully described in the first embodiment, are the same as those in the first embodiment, and therefor, the detailed explanation thereof is omitted.

The containing case main body 244 is formed in such a shape as to allow the battery 240 inserted in the containing case main body 244 to be tilted back and forth in a state in which the lid 245 is opened. Specifically, a distance between the front case half 241 and the rear case half 242 is set to be larger at the upper portion of the containing case main body 244 than at the lower portion thereof.

Further, a pressing portion 268 is provided on the lid 245. When the lid 245 is closed, the pressing portion 268 is brought in contac with an upper end of the rear portion of the battery 240 contained in the containing case main body 244 to press the battery 240 in the direction where the battery 240 is tilted forward as shown in Fig. 20. That is, in the state in which the lid 245 is closed, the battery 240 is pressed by the pressing portion 268 in the direction where the battery 240 is tilted forward.

A pair of locking recessed portions 269, 269 are provided in the front portion of the front case half 241 of the containing case main body 244. The locking recessed portions 269, 269 are formed as, for example, rectangular through-holes with upper edge portions thereof mated with the lower surface of the stay 249. Besides, engagement projecting portions 270, 270 are projectingly provided on the front surface of the battery 240, that is, on the first case half 263. The engagement projecting portions 270, 270 are engaged with the locking recessed portions 269, 269 in accordance with forward tilting of the battery 240 in the containing case main body 244.

Ribs 274, 274 are integrally provided on the front portion of the front case half 241 of the containing case main body 244 at positions lower than the locking recessed portions 269, 269. The ribs 274, 274 are brought in contact with the front surface of the battery 240 in accordance with the forward tilting of the battery 240 in the containing case main body 244. Also, a restricting projecting portion 275 is integrally provided on the front portion of the front case half 241 of the containing case main body 244. The restricting projecting portion 275 can be engaged with the upper surface of the battery 240 in accordance with the forward tilting of the battery 240 in the containing case main body 244. Specifically, as described above, the grasp portion 265 is raised upward from the widthwise central portion of the battery case 262 of the battery 240, and the restricting projecting portion 275 is projectingly provided on the front case half 241 in such a manner as to be engaged with the upper surface of the battery case 262 at a position lower than the grasp portion 265.

A pair of elastic portions 271, 271 are formed on the front portion of the front case half 241 of the containing case main body 244 by, for example, cutting and raising part of the front case half 241 made of synthetic resin. The elastic portions 271, 271 elastically bias the battery 240 in the direction reversed to the direction along which the battery 240 is pressed accompanied by closing the lid 245, but they allow the battery 240 to be tilted up to a position where the engagement projecting portions 270, 270 are engaged with the locking recessed portions 269, 269 when the lid 245 is closed. The elastic portions 271, 271 are also disposed on the containing case main body 242 at positions offset from loci depicted by the engagement projecting portions 270, 270 provided on the battery 240 when the battery 240 is inserted/removed into/from the containing case main body 244, that is, at positions offset sideward from vertical positions of the locking recessed portions 269, 269.

In the state in which the lid 245 is opened, there is a possibility that rainwater permeates in the containing case main body 244. To prevent water or the like from being collected in the containing case main body 244, a drain hole 272 is provided in a lower end portion of a back surface portion of the containing case main body 244, that is, at a lower end portion of a back surface portion of the rear case half 242.

According to the second embodiment, as described above, the swelled portions 238b, 238b are integrally provided on both sides of the rear portion of the basket 238 in such a manner as to be swelled on both sides of the battery containing case 239. The recessed portion 238a for containing part of the battery containing case 239 is formed between the swelled portions 238b, 238b. The swelled portions 238b, 238b are fastened to the stay 249 fixed on the supporting frame 248 by the weld nuts 260, 260 and the screw members 261, 261. Since a baggage is little contained in the swelled portions 238b, 238b, and accordingly, the screw members 261, 261 do not interfere with a baggage contained in the basket 238.

The containing case main body 244 is formed in such a shape as to allow the battery 240 inserted in the containing case main body 244 to be tilted back and forth in the state in which the lid 245 is opened. And, the lid 245 is provided with the pressing portion 268 which is brought in contact with the battery 240 when the lid 245 is closed and presses the battery 240 in the direction where the battery 240 is tilted forward in the containing case main body 244.

Accordingly, when the battery 240 is contained in the containing case main body 244 and the lid 245 is closed, as shown in Fig. 20, the pressing force is applied to the upper portion of the battery 240 in the direction shown by an arrow 276, so that the front surface of the battery 240 is pressed to the ribs 274, 274 projectingly provided on the front case half 241 of the containing case main body 244 and the lower end of the rear portion of the battery 240 is pressed to a contact point P at the lower end of the rear portion of the containing case main body 244. Thus, the battery 240 in the containing case main body 239 is substantially prevented from being vibrated in the vertical direction. Further, the battery 240 is prevented from moved upward by engagement of the restricting projecting portion 274 with the upper surface of the widthwise central portion of the battery 240 in accordance with forward tilting of the battery 240.

The pair of the locking recessed portions 269, 269 with upper edges thereof mated with the lower surface of the metal stay 249 are provided on the front surface of the containing case main body 244, and the pair of the engagement projecting portions 270, 270 are provided in the front surface portion of the battery 240. The engagement projecting portions 270, 270 are engaged with the upper edges of the locking recessed portions 269, 269 and the lower surface of the stay 249 in accordance with the forward tilting of the battery 240 accompanied by the closing of the lid 245. Consequently, it is possible to effectively restrict the battery 240 in the containing case main body 244 not to be vibrated in the vertical direction, and hence to positively keep the connecting state between the discharging contacts 75a, 76a of the battery 240 and the discharging terminals 89, 90 of the terminal box 88. In particular, even when a relatively large shock is applied to the front wheel W_{F} (see Fig. 1) due to irregularities of a road surface, the upward movement of the battery 240 can be effectively suppressed by engagement of the battery 240 with the metal stay 249.

The elastic portions 271, 271 are provided on the containing case main body 244. The elastic portions 271, 271 elastically bias the battery 240 in the direction reversed to the direction where the battery 240 is pressed accompanied by closing of the lid 245, but they allow the battery 240 to be tilted up to a position where the engagement projecting portions 270, 270 are engaged with the locking recessed portions 269, 269 when the lid 245 is closed. Accordingly, when the lid 245 is opened, as shown in Fig. 23, the battery 240 is tilted rearward by the elastic portions 271, 271, to automatically release the engagement of the engagement projecting portions 270, 270 with the locking recessed portions 269, 269. The elastic portions 271, 271 are also provided on the containing case main body 244 at positions offset from the loci depicted by the engagement projecting portions 270, 270 provided on the battery 240 when the battery 240 is inserted/removed into/from the containing case main body 244. Accordingly, it is possible to avoid interference between the engagement projecting portions 270, 270 and the elastic portions 271, 271 when the battery 240 is inserted/removed into/from the containing case main body 244. Thus, the insertion/removal of the battery 240 into/from the containing case main body 244 can be easily performed.

The cover walls 242c, 242c are integrally provided on either of the front case half 241 and the rear case half 242 constituting the containing case main body 244, for example, on the rear case half 242. The cover walls 242c, 242c cover connecting portions of both the case halves 241, 242 from the outside substantially throughout the entire lengths in the vertical direction. Accordingly, the connecting portions of both the case halves 241, 242 are covered with the cover walls 242c, 242c not to be viewed from the outside. This is effective to ensure a preferable appearance.

Fig. 25 shows a third embodiment of the present invention. In this embodiment, parts corresponding to those in the first and second embodiments are indicated by the same reference numerals.

A battery containing case 39 is disposed on a back surface portion of a basket 38 mounted on a head pipe 22 provided at a front end of a body frame 21. The battery containing case 39 insertably/removably contains a battery 40 in the same vertical direction as the direction along which a baggage is removably inserted in the basket 38. A basket 38', which is the same as the basket 38 mounted on the head pipe 22, is mounted on a rear carrier 29 behind a seat 27 in such a manner that the front surface of the basket 38' is reversed from that of the basket 38. A battery containing case 39' for insertably/removably containing a battery 40' in the same vertical direction as the direction along which a baggage is removably inserted in the basket 38' is disposed on a front surface portion of the basket 38'.

A supporting stay 279 is fastened to a front portion of the rear carrier 29. The basket 38' is disposed on the rear carrier 29 in such a manner as to be supported by the supporting stay 279 and the rear carrier 29. The battery containing case 39' is disposed on the front surface portion of the basket 38' in such a manner as to be supported by the supporting stay 279.

A cord 280 for supplying a power to the battery 40' is connected to a cord 282 via a coupler 281. The cord 282 is connected to a controller 37 in parallel a cord (not shown) connected to the battery 40.

According to the third embodiment, since the batteries 40, 40' are contained in the battery containing cases 39, 39' respectively, the capacitance of a power to be supplied to an electric motor 30 is doubled to thereby prolong the running distance. The battery 40' can be used as a spare power supply by releasing the connection between the cords 280, 282 via the coupler 281. In this case, if the exhaustion of the battery 40 accidentally occurs, then the electric motor 30 can be driven by switching the power supply from the battery 40 to the battery 40'.

In the case where the motor-assisted bicycle is frequently used in such a condition that it contains a relatively heavy baggage in the basket 38 mounted on the head pipe 22 and runs on a road having steps required for the bicycle to ride across the steps with the front portions thereof being lifted, the front portion of the bicycle can be lightened by containing the battery 40' only in the battery containing case 39' mounted on the rear carrier 29. Further, either of the battery containing cases 39, 39' is selected in accordance with the weights of baggages contained in the baskets 38, 38', and battery 40 or 40' can be contained in the selected battery containing case 39, or 39'. In this way, the containing of the batteries in the battery containing cases can be flexibly selected depending on the weights of the baggages contained in the baskets. Further, if one of the battery containing cases 39, 39' is not used for containing the battery, it can be used as a small-article containing case provided with a lock. In this case, the rider can go shopping with the bicycle left in a state in which a small-article is contained in one of the battery containing cases 39, 39', that is, in a small-article containing case provided with a lock.

Since both the baskets 38, 38' are identical in shape to each other, it is possible to enhance the flexibility of parts. Further, since the battery containing cases 39, 39' are mounted on the baskets 38, 38' respectively, the use can select either the head pipe 22 side or the rear carrier 29 side.

Furtheron, there can be adopted a structure of elastically biasing the battery 240 in the direction where the battery 240 is tilted rearward when the lid 245 is closed. The locking recessed portions may be provided on the battery 240 side and the engagement projecting portions to be engaged with the locking recessed portions may be provided on the containing case main body 244 side. An elastic material such as rubber may be stuck on an inner surface of the containing case main body 244 as an elastic portion. The cover walls may be provided on the front case half 241 or the containing case main body 244.

## Claims

1. A battery mounting structure for a motor-assisted bicycle in which an electric motor (30) for assisting a step-on force of crank pedals (32) and a battery (40, 40', 240) are to be mounted on a body frame (21), said battery (40, 40', 240) being composed of a battery case (62, 262) containing a cell assembly (61) for supplying a power to said electric motor (30),
**characterized in that**
said battery (40, 40', 240) is vertically insertably/removably contained in a battery containing case (39, 39', 239) disposed on a back surface portion or a front surface portion of a basket (38, 38', 238) to be mounted on said motor-assisted bicycle.

2. A motor-assisted bicycle with a battery mounting structure according to claim 1, wherein said basket (38, 238) is mounted on a head pipe (22) provided on a front end of said body frame, and said battery containing case (39, 239) is disposed on the back surface portion of said basket.

3. A motor-assisted bicycle with a battery mounting structure according to claim 1 or 2, wherein said basket (38, 238) is mounted on a rear carrier (29) behind a seat (27) and said battery containing case (39') is disposed on the front surface portion of said basket (38').

4. A motor-assisted bicycle with a battery mounting structure according to claim 2, wherein a further basket (38') is mounted on a rear carrier (29) behind a seat (27) of said motor-assisted bicycle, and a spare battery containing case (39') containing vertically insertably and removably a spare battery (40') is disposed on the front surface portion of said further basket (38').

5. A motor-assisted bicycle according to claim 4, wherein said spare battery containing case (39') is formed into a box-like shape capable of insertably/removably containing said spare battery (40') in the vertical direction, and wherein the spare battery containing case (39') is mounted on the basket (38') which is mounted on the rear carrier (29) behind a seat (27) by means of a supporting stay (279).

6. A motor-assisted bicycle according to claim 4, wherein said battery (40) or said spare battery (40') can be contained in a selected one of said battery containing case (39) or said spare battery containing case (39').

## Patentansprüche

1. Batteriehalterungsstruktur für ein Fahrrad mit Hilfsmotor, worin ein Elektromotor (30) zum Unterstützen einer Tretkraft von Kurbelpedalen (32) und eine Batterie (40, 40', 240) an einem Hauptrahmen (21) anzubringen sind, wobei die Batterie (40, 40', 240) aus einem Batteriegehäuse (62, 262), das eine Zellenanordnung (61) zur Stromversorgung des Elektromotors (30) enthält, aufgebaut ist,
**dadurch gekennzeichnet, dass**
die Batterie (40, 40', 240) in einem Batterieaufnahmegehäuse(39, 39', 239), das an einem Rückflächenabschnitt oder einem Frontflächenabschnitt eines Korbs (38, 38', 238), der an dem Fahrrad mit Hilfsmotor anzubringen ist, vertikal einsetzbar/entfernbar aufgenommen ist.

2. Fahrrad mit Hilfsmotor mit einer Batteriehalterungsstruktur nach Anspruch 1, worin der Korb (38, 238) an einem am Vorderende des Hauptrahmens vorgesehenen Kopfrohr (22) angebracht ist und das Batterieaufnahmegehäuse (39, 239) an dem Rückflächenabschnitt des Korbs angeordnet ist.

3. Fahrrad mit Hilfsmotor mit einer Batteriehalterungsstruktur nach Anspruch 1 oder 2, worin der Korb (38, 238) an einem Heckträger (29) hinter einem Sitz (27) angebracht ist und das Batterieaufnahmegehäuse (39') an dem Frontflächenabschnitt des Korbs (38') angeordnet ist.

4. Fahrrad mit Hilfsmotor mit einer Batteriehalterungsstruktur nach Anspruch 2, worin ein weiterer Korb (38') an einem Heckträger (29) hinter einem Sitz (27) des Fahrrads mit Hilfsmotor angebracht ist und ein Reservebatterie-Aufnahmegehäuse (39'), das eine Reservebatterie (40') vertikal einsetzbar und entfernbar enthält, an dem Frontflächenabschnitt des weiteren Korbs (38') angeordnet ist.

5. Fahrrad mit Hilfsmotor nach Anspruch 4, worin das Reservebatterie-Aufnahmegehäuse (39') zu einer kastenartigen Form ausgebildet ist, die in der Lage ist, die Reservebatterie (40') in der vertikalen Richtung einsetzbar/entfernbar aufzunehmen, und worin das Reservebatterie-Aufnahmegehäuse (39') an dem Korb (38') angebracht ist, der an dem Heckträger (29) hinter einem Sitz (27) mittels einer Tragstrebe (279) angebracht ist.

6. Fahrrad mit Hilfsmotor nach Anspruch 4, worin die Batterie (40) oder die Reservebatterie (40') in einem gewählten des Batterieaufnahmegehäuses (39) oder des Reservebatterieaufnahmegehäuses (39') aufgenommen werden kann.

## Revendications

1. Structure de montage de batterie pour une bicyclette à moteur auxiliaire dans laquelle un moteur électrique (30) pour assister une force au pied de pédales à manivelle (32) et une batterie (40, 40', 240) sont montés sur un cadre (21), ladite batterie (40, 40', 240) étant composée d'un boîtier de batterie (62, 262) contenant un assemblage à compartiments (61) pour alimenter en puissance ledit moteur électrique (30),
**caractérisée en ce que** ladite batterie (40, 40', 240) est contenue verticalement de façon insérable /amovible dans un boîtier contenant la batterie (39, 39', 239) disposé sur une portion de surface arrière ou une portion de surface avant d'un panier (38, 38', 238) devant être montée sur ladite bicyclette à moteur auxiliaire.

2. Bicyclette à moteur auxiliaire avec une structure de montage de batterie selon la revendication 1, dans laquelle ledit panier (38, 238) est monté sur un tube de direction (22) prévu sur une extrémité avant dudit cadre, et ledit boîtier contenant la batterie (39, 239) est disposé sur la portion de surface arrière dudit panier.

3. Bicyclette à moteur auxiliaire avec une structure de montage de batterie selon la revendication 1 ou 2, dans laquelle ledit panier (38, 238) est monté sur un support arrière (29) derrière un siège (27) et ledit boîtier contenant la batterie (39') est disposé sur la portion de surface avant dudit panier (38').

4. Bicyclette à moteur auxiliaire avec une structure de montage de batterie selon la revendication 2, dans laquelle un autre panier (38') est monté sur un support. arrière (29) derrière un siège (27) de ladite bicyclette à moteur auxiliaire, et un boîtier contenant une batterie de rechange (39') contenant une batterie de rechange (40') insérable et amovible verticalement est disposé sur la portion de surface avant dudit autre panier (38').

5. Bicyclette à moteur auxiliaire selon la revendication 4, dans laquelle ledit boîtier contenant une batterie de rechange (39') est formé en forme de boîte capable de contenir de façon insérable /amovible ladite batterie de rechange (40') dans le sens vertical, et dans laquelle le boîtier contenant la batterie de rechange (39') est monté sur le panier (38') qui est monté sur le support arrière (29) derrière un siège (27) au moyen d'un montant de support (279).

6. Bicyclette à moteur auxiliaire selon la revendication 4, dans laquelle ladite batterie (40) ou ladite batterie de rechange (40') peut être contenue dans un boîtier choisi entre ledit boîtier contenant la batterie (39) et ledit boîtier contenant la batterie de rechange (39').
